## Europäisches Patentamt
## European Patent Office
## Office européen des brevets

(19)

(11) Publication number: **0 298 552 B1**

(12)

# EUROPEAN PATENT SPECIFICATION

(45) Date of publication of patent specification:
18.09.91 Bulletin 91/38

(51) Int. Cl.⁵: **A23L 1/226, A23C 15/14**

(21) Application number: 88201374.1

(22) Date of filing: 01.07.88

(54) Process for the preparation of a flavoured foodstuff as well as a foodstuff obtainable by such a process.

(30) Priority: 10.07.87 NL 8701638

(43) Date of publication of application:
11.01.89 Bulletin 89/02

(45) Publication of the grant of the patent:
18.09.91 Bulletin 91/38

(84) Designated Contracting States:
AT BE CH DE ES FR GB GR IT LI NL SE

(56) References cited:
EP-A- 0 059 997
EP-A- 0 074 140
EP-A- 0 173 401
DE-A- 2 318 805
US-A- 4 414 229

(73) Proprietor: UNILEVER NV
Burgemeester s'Jacobplein 1 P.O. Box 760
NL-3000 DK Rotterdam (NL)

(84) Designated Contracting States:
BE CH DE ES FR GR IT LI NL SE AT
Proprietor: UNILEVER PLC
Unilever House Blackfriars P.O. Box 68
London EC4P 4BQ (GB)

(84) Designated Contracting States:
GB

(72) Inventor: Haring, Petrus Gerardus Maria
Sportlaan 14
NL-3135 GV Vlaardingen (NL)

(74) Representative: Mulder, Cornelis Willem
Reinier, Dr. et al
UNILEVER N.V. Patent Division P.O. Box 137
NL-3130 AC Vlaardingen (NL)

EP 0 298 552 B1

EP 0 298 552 B1

## Description

The present invention relates to a process for preparing flavoured foodstuffs by adding a flavour concentrate having a butter-like flavour, and to a foodstuff obtainable by such a process. Here, by the term flavour both the odour and the taste impression are meant.

The addition of flavour concentrates to foodstuffs to give them a butter-like flavour is already known for decades. In general concentrates comprise a mixture of individually prepared flavour compounds and are added to foodstuffs at low concentration levels. Examples of flavour compounds that are used in such mixtures are : diacetyl, dimethyl sulphide, 4-cis-heptenal and delta-lactones. A drawback of adding mixtures of such flavour compounds is that they approach the flavour of butter only to a limited extent and that, regarding the flavour, foodstuffs which have been flavoured with the aid of such a mixture differ perceivably from natural butter.

In addition, it is known to add butter or butterfat to foodstuffs, such as margarine, to transfer to these foodstuffs the butter flavour derived from the butter or the butterfat. A disadvantage of adding butter or butterfat is that in this manner, depending on the amount added, only a butter flavour of limited intensity can be imparted to foodstuffs. Thus it is, for instance, impossible to prepare a spread, besides butterfat also containing a substantial amount of another fat, having a flavour indistinguishable from butter. It is, of course, possible to complement the flavour derived from butter or butterfat by using a mixture of flavour compounds but, as already indicated above, such addition has the disadvantage that no balanced butter flavour can be obtained, as a result of which the flavour obtained differs perceivably from the natural butter flavour.

It has now been found that a balanced butter flavour can be imparted to foodstuffs by adding oxidized butterfat. Thus the present invention relates to a process for preparing a flavoured foodstuff by adding to edible material at least 0.05% (w/w) oxidized butterfat having a peroxide value of at least 0.7, preferably of at least 1.5, having an n-pentanal content of more than 0.5 ppm and/or a 2-trans-nonenal content of more than 0.05, more preferably of more than 0.01 ppm. In the process according to the present invention, the oxidized butterfat preferably contains at least 0.8 ppm n-pentanal and/or more than 0.4 ppm 2-trans-nonenal.

An advantage of the addition of oxidized butterfat to foofstuffs is that in this manner a butter flavour can be imparted to such products that cannot, or barely, be distinguished from the flavour of natural butter. Said butter flavour is moreover obtained in a more efficient way than by the addition of non-oxidized butter or non-oxidized butterfat, since less oxidized butterfat is required for obtaining the same flavour intensity than in case non-oxidized butterfat were used instead.

There exist a lot of publications relating to oxidized butterfat, all of which publications have in common that they regard oxidation of butterfat as undesirable, for instance, because of its bad effect on the butter flavour. An example of a publication in which this prejudice is encountered is an article by P.A.T. Swododa and K.E. Peers in J. Sci. Fd Agric. 28, 1010-1018 (1977).

Examples of qualifications used in literature for characterizing the flavour of oxidized butterfat are : rancid, metallic and fish-like. Thus it may be clear that it is unexpected that the use of oxidized butterfat in foodstuffs results in a positive contribution to the flavour of such foodstuffs,

A prejudice against using oxidized butterfat in foodstuffs also appears from the fact that many dairy firms set standards for the degree to which the butterfat may be oxidized. In Europe, these standards mostly lie at a maximum peroxide value of 0.2 or 0.3 milli-equivalent oxygen per kg fat. Furthermore, according to a publication in the Official Journal of the European Community, N° L 191/10, dated 14.7.81, the EEC standard for concentrated butter appears to lie at a maximum peroxide value of 0.5 milli-equivalent active oxygen per kg fat.

The butterfat used in the process of the present invention, on the contrary, has been oxidized to a substantially higher level although, as explained hereinafter, this is not necessarily accompanied by a high peroxide value.

The oxidized butterfat used in the process according to the present invention, may be obtained by oxidizing butterfat as such or alternatively, for example, by subjecting a butterfat-in-water (such as cream or milk) or a water-in-butterfat emulsion to oxidative conditions. When oxidizing under such conditions, aldehydes, such as n-pentanal, n-hexanal, n-heptanal, n-nonanal and 2-trans-nonenal, are formed from unsaturated fatty acid radicals.

The oxidized butterfat used according to the present invention preferably contains more than 0.4, more preferably more than 1 ppm, n-hexanal. Butterfat having a total n-heptenal, n-hexanal and n-nonanal content of more than 2 ppm is particularly suitable for use in the process according to the present invention. In case the oxidized butterfat is added at a concentration level exceeding 1% (w/w), the peroxide value of the butterfat is preferably lower than 10. In case the oxidized butterfat is added at a lower concentration level, the peroxide value is preferably lower than the number obtained by taking the quotient of 10 and the square root of the weight

2

concentration at which the oxidized butterfat is added. When the oxidized butterfat is added at relatively low concentration levels, i.e. at levels below 1 wt.%, it was found to be less objectionable if said fat has a relatively high peroxide value, i.e. a peroxide value exceeding 10. Especially preferred is a process in which, in case of addition above said concentration level of 1%, the oxidized butterfat has a peroxide value of less than 2, and in case of addition below this level, a peroxide value which is lower than the number obtained by taking the quotient of 2 and the square root of the weight concentration at which the oxidized butterfat is added.

The peroxide value indicates the amount of peroxides present in the fat and is expressed in milli-equivalent oxygen per kg fat. The way in which the peroxide value can be determined is described by P.G. Powick, J. Agric. Res. 26, 323 (1923).

Although the peroxide value is often used as a measure for the degree in which a product is oxidized, it is possible to oxidize a product to a high degree, which may become apparent from the increase in the aldehyde content, without the peroxide value increasing substantially. This may be explained from the fact that the peroxide value only indicates how much of an intermediate oxidation product is present. In the process according to the present invention, the peroxide value is preferably kept fairly low by choosing, during oxidation, conditions which promote the conversion of the peroxides formed into further oxidation products.

By foodstuffs are understood : products which are suitable, and intended, for human consumption, i.e. products which are non-toxic when consumed in normal amounts. Examples of foodstuffs which are particularly suitable for being flavoured by means of oxidized butterfat are : spreads, confectionery, bakery raw materials and bakery products.

As the oxidized butterfat acts as a butter flavour concentrate, preferably 0.1-30% (w/w), more preferably 0.2-5% (w/w), calculated on the foodstuff, of the oxidized butterfat is added to the edible material in the process of the present invention. In order to obtain a flavoured foodstuff of optimal quality, it is advisable that the oxidized butterfat be mixed homogeneously with the edible material. By a homogeneous distribution it is avoided that certain parts of the foodstuff will contain oxidized butterfat at such a high concentration level that an unpleasant flavour is imparted thereto.

The flavour compounds formed during oxidation of the butterfat are believed to mainly originate from the unsaturated fatty acid residues present in said butterfat. Thus it may be benificial to apply fractions of butterfat which are enriched in unsaturated fatty acid residues. An example of a butterfat fraction having a relatively high content of unsaturated fatty acid residues is the fat found in buttermilk buttermilk powder and butterserum powder.

The edible material used in the process according to the present invention is preferably not oxidized. In case the edible material is (partly) oxidized, the flavoured foodstuff is likely to have an off-flavour as in general oxidation of edible material results in the formation of off-flavours. Moreover the oxidation of edible material often results in the formation of peroxides and aldehydes, just like in the oxidation of butterfat. If a foodstuff obtained by the present process comprises both flavour compounds, formed during the oxidation of the edible material, and flavour compounds originating from the oxidized butterfat, said product will not have a pleasant balanced butter flavour.

As the flavour derived from the oxidized butterfat is particularly intense and may benificially be combined with the flavour of non-oxidized butterfat, preferably more than 5% (w/w) non-oxidized butterfat is added to the edible material.

Furthermore, in the present process the oxidized butterfat is preferably mixed with water and a non-oxidized fat such that a stable emulsion is obtained. The emulsion obtained can, for example, be a water-in-oil emulsion, an oil-in-water emulsion, but also an oil-in-water-in-oil emulsion, in which the water can also be present in the form of ice.

Foodstuffs that can be obtained in the form of a stable emulsion according to the above-mentioned process are, for example, spreads, such as margarine and reduced-fat spreads. Preferably, the oxidized butterfat, the water and the non-oxidized fat are mixed in ratios such that the foodstuff obtained contains 10-95% (w/w) water and 5-90% (w/w) fat, and the total water and fat content is at least 70% (w/w). Examples of such a foodstuff are a spread containing 10% (w/w) oxidized butterfat, 70% (w/w) (non-oxidized) vegetable fat and 20% (w/w) water, and a spread containing 5% (w/w) oxidized butterfat, 35% (w/w) non-oxidized butterfat and 60% (w/w) water (assuming that the components dissolved in the various components, such as colourant and emulsifiers, form part of these components).

The terms fat and oil are used interchangeably in this application. Both by fat and oil is meant a triglyceride composition or a non-toxic material having properties comparable with those of triglycerides, which material may be indigestible, such as, for instance, jojoba oil or esters of fatty acids and sugars.

The non-oxidized fat used in the process according to the present invention preferably has a peroxide value of less than 2, more preferably of less than 1. Furthermore, non-oxidized fats which are suitable for use in foodstuffs generally have an anisidine value of less than 1 and a total oxidation value of less than 5. The way in which the anisidine value can be determined is described in IUPAC, Standard Methods for the Analysis of Oils, Fats and Derivatives, 6th Ed. (1979), Pergamon Press, Oxford, Method 2,504, page 143. The total oxidation value (TOV) is calculated from the peroxide value (PV) and the anisidine value (AV) as follows : TOV = 2 * PV + AV. This formula for calculating the TOV is described in J.A.O.C.S. 51, 17 (1974) G.R. List et al.

Another aspect of the present invention is an aromatized foodstuff obtainable by a process according to the present invention.

Since in the process according to the present invention preferably only a limited amount of oxidized butterfat is added, and moreover the edible material is substantially non-oxidized, preferably the flavoured foodstuff obtainable by the present process comprises at least 0.05 ppm n-pentanal, at least 0.005 ppm 2-trans-nonenal and at least 0.01 ppm n-heptanal.

The incorporation of oxidized butterfat is particularly beneficial for products containing a limited amount of butterfat, or no butterfat at all. Thus preferably the foodstuff, obtainable by the present process, comprises less than 40 wt.%, more preferably even less than 25 wt.% of butterfat.

It was found that in the foodstuffs which have been flavoured by the process according to the present invention, when the oxidized butterfat is present in a relatively high concentration, especially certain flavour tones dominate, which can be complemented to a more balanced butter flavour by adding, for instance, one or more of the following flavouring compounds : diacetyl, dimethyl sulphide, delta-lactones, indol, skatol and short-chain fatty acids.

Although aldehydes like n-pentanal, 2-trans-nonenal and n-heptanal may be generated in conventional butterfat containing foodstuffs upon storage under oxidative conditions, in the present product said compounds are already present in the product immediately after manufacture. Thus the present product, containing certain minimal amounts of these aldehydes, preferably has not been stored for longer than 10, more preferably not longer than 5 days.

The invention is illustrated by the Examples below.

## Example I

400 g butterfat (ex Corman) is placed in a flask having a round bottom, heated to 30°C and mixed at this temperature with 100 g of an aqueous 10% NaCl solution. Before mixing, the pH of the aqueous solution has been adjusted to 4. After mixing, the emulsion is cooled to a temperature of 20°C. The flask, which is half filled with the emulsion, is sealed and stored for 2 weeks at a temperature of 20°C. After 2 weeks' storage, the fat is separated from the water by heating the emulsion to 40°C and drawing off the fat layer. Any water still present in the fat is separated off by centrifuging.

With the aid of the fat obtained, the following products were prepared :

1) A conventional margarine prepared in a conventional manner by means of a scraped surface heat exchanger, to which margarine, during the preparation, 5% (w/w) of the fat prepared in the above manner was added and to which margarine a conventional flavour cocktail has been added.

2) A margarine as under 1) except that, instead of the oxidized butterfat, the margarine contains the same amount of non-treated butterfat.

3) A conventional reduced-fat spread, containing 40 wt.% of fat, prepared in a conventional manner by means of a surface scraped heat exchanger, to which reduced-fat spread, during the preparation, 4% (w/w) of the fat prepared in the above manner was added and to which reduced-fat spread, moreover, a conventional flavour cocktail was added.

4) A reduced-fat spread as under 3) except that, instead of the treated butterfat, the reduced-fat spread contains the same amount of non-treated butterfat.

Both the margarine and the reduced-fat spread which contain the treated butterfat were clearly preferred to the margarine and reduced-fat spread containing non-treated butterfat.

Of 7 persons who compared the margarine + treated butterfat with margarine + untreated butterfat, 5 preferred the margarine with the oxidized butterfat, while 2 persons could indicate no preference.

From the analysis of the butterfat before and after the treatment it appears that the pentanal content of 0.1 ppm in the original butterfat had increased to 2.3 ppm in the oxidized butterfat as this was obtained after the treatment. The 2-trans-nonenal content in the original butterfat was lower than 0.02 ppm. In the oxidized butterfat a 2-trans-nonenal content of 0.5 ppm was measured. Moreover, the oxidized butterfat further contained 1.5 ppm hexanal, 0.5 ppm heptanal and 2 ppm nonanal.

Before treatment, the butterfat appeared to have a peroxide value of 0.2, a melting point of 31.5°C, an iodine value of 31.3, a water content of 0.13% and a content of free fatty acids of 0.25%.

The peroxide value of the oxidized butterfat was 3.0.

4

## Example 2

100 g butterfat is heated to a temperature of 90°C in a round bottom flask with the aid of an oil bath, after which 20 g water with 50 ppm cupric chloride is added. The mixture is heated for 25 minutes at 90°C, during which stirring is carried out with a stirrer at a speed of 300 rpm. During this period, the flask is completely closed. After the heating period of 25 minutes, 20 ml water with 25 ppm EDTA is added. After one minute, the solution is cooled and the fat phase is separated from the aqueous phase by centrifuging.

The butterfat was analyzed before and after the treatment, from which it appeared that the non-treated butterfat contains 0.1 ppm hexanal and less than 0.1 ppm pentanal, while the treated butterfat contains 4 ppm pentanal and 1.8 ppm hexanal.

Before treatment, the butterfat appeared to have a peroxide value of 0.14, a melting point of 31.6°C, an iodine value of 31.4, a water content of 0.14% and a free fatty acid content of 0.27%.

The oxidized butterfat further contained 0.6 ppm heptanal, 3 ppm nonanal and 0.4 ppm 2-trans-nonenal. The peroxide value of the oxidized butterfat was 0.7.

The fat thus obtained is used for preparing a reduced-fat spread, which reduced-fat spread, apart from the presence of 8% (w/w) of the treated butterfat and 12% (w/w) untreated butterfat, had a standard composition. For comparison, another reduced-fat spread is prepared, which differs from the reduced-fat spread containing treated butterfat in that this reduced-fat spread contains 8% (w/w) untreated butterfat instead of the 8% (w/w) treated butterfat. Both reduced-fat spreads contained a normal flavour composition consisting of diacetyl, lactones and fatty acids.

In a comparative test carried out with 20 persons, the product containing oxidized butterfat is clearly preferred. In this test both products were assessed on a scale from 0 to 10, the reduced-fat spread with oxidized butterfat scoring an average of 7.3 and the reduced-fat spread with only non-treated butterfat an average of 6.8.

## Example 3

10 kg butterfat is mixed with 2 kg tap water containing 10% (w/w) salt and having a pH of 4. The mixture is heated in a closed flask at a temperature of 70°C, with stirring. After 16 hours, the water is separated from the fat with the aid of a centrifuge.

The oxidized butterfat had a peroxide value of 2 and contained 1.2 ppm pentanal, 1.2 ppm hexanal, 0.3 ppm heptanal, 3.1 ppm nonanal and 0.9 ppm 2-trans-nonenal.

The butterfat oxidized in the above manner is subsequently used in the preparation of a margarine comprising a fat phase consisting of 25% (w/w) non-treated butterfat, 5% (w/w) oxidized butterfat and 50% (w/w) vegetable fat. In addition, another margarine is prepared which is identical with the above-mentioned margarine except that, instead of the 5% oxidized butterfat, it contains the same amount of non-treated butterfat. Furthermore, both margarines contain a conventional flavour composition.

A trained panel consisting of 12 persons evaluated the butter taste of both products. None of the 12 panelists found that the product without oxidized butterfat had a butter taste. On the other hand, 6 of the 12 panelists found that the product with oxidized butterfat tasted like butter.

## Example 4

An oil-in-water emulsion was prepared, using the following ingredients (concentrations in % (w/w), calculated on the product) :

I) An oil-in-water emulsion consisting of the following components :

| | |
|---|---|
| Salt | 0.4% |
| Potassium sorbate | 0.13% |
| Whey powder | 1.5% |
| Buttermilk powder | 0.83% |
| Gelatin | 2.0% |
| Sodium caseinate | 3.25% |
| Butter | 8.75% |
| Oxidized butterfat (of Example 3) | 0.8% |
| Water | 47.94% |
| | 65.60% |

The pH of this oil-in-water emulsion was adjusted to 5.5 using a lactic acid/citric acid buffer. The emulsion was subsequently homogenized, using a high pressure mixer at a pressure of 13,790-20,685 kPa (2,000-3,000 psi) and a temperature of 60°C. By sending the emulsion 2-3 times through the mixer, an oil droplet size of 1 micrometer was obtained.

(II) A fat phase consisting of the following components :

| | |
|---|---|
| Butter | 14.65% |
| Vegetable fat | 19.0% |
| Emulsifying agent | 0.4% |
| Beta-carotene | 0.05% |
| | 34.10% |

The oil-in-water emulsion and the fat phase were processed into an oil-in-water-in-oil emulsion by mixing both phases, using a scraped surface heat exchanger (cooled) of the Votator (trademark) type.

The product obtained had a hardness of 800 measured at 5°C, and a hardness of 230 at 15°C. The solid fat content at 5°C was 45% and at 15°C 12.8%. In taste tests, the product appeared to have a very pronounced butter taste.

Example 5

500 g butterfat (ex. Frico (Tradename), Holland) is mixed with 100 g of a 10% NaCl solution (pH = 4) and placed in an autoclave provided with internal stirrers. The mixture is heated in the autoclave at a temperature of 110°C during 5 hours, under a pressure of 1 atmosphere, while stirring at a speed of 500 rpm. After the heating the fat is separated by means of centrifugation.

The oxidized butterfat had a peroxide value of 1.5 and contained 2 ppm n-pentanal, 1 ppm n-hexanal, 1 ppm n-heptanal, 1.4 ppm n-nonanal and 1 ppm 2-trans-nonenal.

The incorporation of 1000 ppm of the oxidized butterfat in a conventional non-flavoured spread introduces a sweet after-taste which is not perceived in an identical product containing butterfat instead of oxidized butterfat.

**Claims**

1. Process for preparing a flavoured foodstuff, characterized in that at least 0.05% (w/w) oxidized butterfat having a peroxide value of at least 0.7, having an n-pentanal content of more than 0.5 ppm and/or a 2-trans-nonenal content of more than 0.05 ppm is added to edible material.

2. Process according to claim 1, characterized in that the n-pentanal content of the oxidized butterfat is more than 0.5 ppm and/or the 2-trans-nonenal is more than 0.1 ppm.

3. Process according to Claim 2, characterized in that the n-pentanal content of the oxidized butterfat is more than 0.8 ppm and/or the 2-trans-nonenal content is more than 0.4 ppm.

4. Process according to any one of Claims 1-3, characterized in that the oxidized butterfat contains at least 0.4 ppm, preferably more than 1 ppm n-hexanal.

5. Process according to any one of Claims 1-4, characterized in that the total content of n-pentanal, n-hexanal and n-nonanal in the oxidized butterfat is at least 2 ppm.

6. Process according to any one of Claims 1-5, characterized in that the oxidized butterfat, when added in a concentration of more than 1% (w/w), has a peroxide value of less than 10, and, when added in a concentration lower than 1% (w/w), has a peroxide value which is lower than the number obtained by taking the quotient of 10 and the square root of the weight concentration of oxidized butterfat in the product.

7. Process according to any one of Claims 1-6, characterized in that 0.1-30% (w/w) of the oxidized butterfat is added to the edible material.

8. Process according to any one of Claims 1-7, characterized in that the oxidized butterfat is mixed homogeneously with the edible material.

9. Process according to any one of Claims 1-8, characterized in that the edible material is not oxidized.

10. Process according to any one of Claims 1-9, characterized in that at least 5% (w/w) non-oxidized butterfat is added to the edible material.

11. Process according to any one of Claims 1-10, characterized in that the oxidized butterfat is mixed with water and a non-oxidized fat such that a stable emulsion is obtained.

12. Process according to Claim 11, characterized in that the oxidized butterfat, the water and the non-oxidized fat are mixed in ratios such that the product obtained contains 10-95% (w/w) water and 5-90% (w/w) fat and the total content of water and fat is at least 70% (w/w).

13. Process according to any one of Claims 1-12, characterized in that the oxidized butterfat has a peroxide value of at least 1.5.

14. Flavoured foodstuff obtainable by a process according to any one of Claims 1-13.

15. Flavoured foodstuff according to Claim 14, characterized in that the foodstuff comprises at least 0.05 ppm n-pentanal, at least 0.005 ppm 2-trans-nonenal and at least 0.01 ppm n-heptanal.

16. Flavoured foodstuff according to Claim 14 or 15, characterized in that the foodstuff comprises less than 40 wt.% of butterfat.

17. Flavoured foodstuff according to anyone of Claims 14-16, characterized in that the product has not been stored for longer than 10, more preferably not longer than 5 days.

## Patentansprüche

1. Verfahren zur Zubereitung eines aromatisierten Nahrungsmittels, dadurch gekennzeichnet, daß einem eßbaren Material mindestens 0,05 % (Gew./Gew.) oxidiertes Butterfett mit einer Peroxidzahl von mindestens 0,7, mit einem n-Pentanalgehalt von mehr als 0,5 ppm und/oder einem 2-trans-Nonenalgehalt von mehr als 0,05 ppm zugefügt wird.

2. Verfahren gemäß Anspruch 1, dadurch gekennzeichnet, daß der n-Pentanalgehalt des oxidierten Butterfettes mehr als 0,5 ppm und/oder der 2-trans-Nonenalgehalt mehr als 0,1 ppm beträgt.

3. Verfahren gemäß Anspruch 2, dadurch gekennzeichnet, daß der n-Pentanalgehalt des oxidierten Butterfettes mehr als 0,8 ppm und/oder der 2-trans-Nonenalgehalt mehr als 0,4 ppm beträgt.

4. Verfahren gemäß irgendeinem der Ansprüche 1 bis 3, dadurch gekennzeichnet, daß das oxidierte Butterfett mindestens 0,4 ppm, vorzugsweise mehr als 1 ppm, n-Hexanal enthält.

5. Verfahren gemäß irgendeinem der Ansprüche 1 bis 4, dadurch gekennzeichnet, daß der Gesamtgehalt an n-Pentanal, n-Hexanal und n-Nonanal im oxidierten Butterfett mindestens 2 ppm beträgt.

6. Verfahren gemäß irgendeinem der Ansprüche 1 bis 5, dadurch gekennzeichnet, daß das oxidierte Butterfett — wenn es in einer Konzentration von mehr als 1% (Gew./Gew.) zugefügt wird — eine Peroxidzhal von weniger als 10 hat und — wenn es in einer Konzentration unter 1% (Gew.-/Gew.) zugefügt wird — eine Peroxidzahl hat, die niedriger ist als die Zahl, die man aus dem Quotienten von 10 und der Quadratwurzel der Gewichtskonzentration des oxidierten Butterfettes im Produkt erhält.

7. Verfahren gemäß irgendeinem der Ansprüche 1 bis 6, dadurch gekennzeichnet, daß dem eßbaren Material 0,1 bis 30 % (Gew./Gew.) des oxidierten Butterfettes zugefügt werden.

8. Verfahren gemäß irgendeinem der Ansprüche 1 bis 7, dadurch gekennzeichnet, daß das oxidierte Butterfett homogen mit dem eßbaren Material gemischt wird.

9. Verfahren gemäß irgendeinem der Ansprüche 1 bis 8, dadurch gekennzeichnet, daß das eßbare Material nicht oxidiert ist.

10. Verfahren gemäß irgendeinem der Ansprüche 1 bis 9, dadurch gekennzeichnet, daß dem eßbaren Material mindestens 5% (Gew./Gew.) nicht-oxidiertes Butterfett zugefügt werden.

11. Verfahren gemäß irgendeinem der Ansprüche 1 bis 10, dadurch gekennzeichnet, daß das oxidierte Butterfett mit Wasser und einem nicht-oxidierten Fett gemischt wird, so daß man eine stabile Emulsion erhält.

12. Verfahren gemäß Anspruch 11, dadurch gekennzeichnet, daß das oxidierte Butterfett, das Wasser und das nicht-oxidierte Fett in solchen Verhältnissen gemischt werden, daß das erhaltene Produkt 10 bis 95% (Gew. /Gew.) Wasser und 5 bis 90% (Gew./Gew.) Fett enthält und der Gesamtgehalt an Wasser und Fett mindestens 70 % (Gew./Gew.) beträgt.

13. Verfahren gemäß irgendeinem der Ansprüche 1 bis 12, dadurch gekennzeichnet, daß das oxidierte Butterfett eine Peroxidzahl von mindestens 1,5 hat.

14. Aromatisiertes Nahrungsmittel, erhältlich nach einem Verfahren gemäß irgendeinem der Ansprüche 1 bis 13.

15. Aromatisiertes Nahrungsittel gemäß Anspruch 14, dadurch gekennzeichnet, daß es mindestens 0,05 ppm n-Pentanal, mindestens 0,005 ppm 2-trans-Nonenal und mindestens 0,01 ppm n-Heptanal umfaßt.

16. Aromatisiertes Nahrungsmittel gemäß Anspruch 14 oder 15, dadurch gekennzeichnet, daß es weniger als 40 Gew.-% Butterfett umfaßt.

17. Aromatisiertes Nahrungsmittel gemäß irgendeinem der Ansprüche 14 bis 16, dadurch gekennzeichnet, daß das Produkt nicht länger als 10, vorzugsweise nicht länger als 5, Tage gelagert worden ist.

## Revendications

1. Un procédé pour la préparation d'un produit alimentaire aromatisé caractérisé en ce qu'on ajoute à un matériau comestible au moins 0,05% (en masse) de matière grasse de beurre oxydée ayant un indice de peroxyde d'au moins 0,7, une teneur en n-pentanal supérieure à 0,5 ppm et/ou une teneur en 2-trans-nonenal supérieure à 0,05 ppm.

2. Un procédé selon la Revendication 1, caractérisé en ce que la teneur en n-pentanal de la matière grasse de beurre oxydée est supérieure à 0,5 ppm et/ou la teneur en 2-trans-nonenal est supérieure à 0,1 ppm.

3. Un procédé selon la Revendication 2, caractérisé en ce que la teneur en n-pentanal de la matière grasse de beurre oxydée est supérieure à 0,8 ppm et/ou en ce que la teneur en 2-trans-nonenal est supérieure à 0,4 ppm.

4. Un procédé selon l'une des Revendications 1-3, caractérisé en ce que la matière grasse de beurre oxydée contient au moins 0,4 ppm, et de préférence plus de 1 ppm de n-hexanal.

5. Un procédé selon l'une des Revendications 1-4, caractérisé en ce que la teneur totale en n-pentanal, n-hexanal et n-nonanal dans la matière grasse de beurre oxydée est d'au moins 2 ppm.

6. Un procédé selon l'une des Revendications 1 -5, caractérisé en ce que la matière grasse de beurre oxydée a un indice de péroxyde inférieur à 10 lorsqu'elle est ajoutée à une concentration supérieure à 1% (en masse) et, lorsqu'elle est ajoutée à une concentration inférieure à 1% (en masse), un indice de peroxyde qui est inférieur au nombre obtenu en prenant le quotient de 10 par la racine carrée de la concentration en masse de matière grasse de beurre oxydée dans le produit.

7. Un procédé selon l'une des Revendications 1-6, caractérisé en ce que 0,1-30% (en masse) de la matière grasse de beurre oxydée est ajoutée au matériau comestible.

8. Un procédé selon l'une des Revendications 1-7, caractérisé en ce que la matière grasse de beurre oxydée est mélangée de façon homogène au matériau comestible.

9. Un procédé selon l'une des Revendications 1-8, caractérisé en ce que le matériau comestible n'est pas oxydé.

10. Un procédé selon l'une des Revendications 1-9, caractérisé en ce qu'au moins 5% (en masse) de matière grasse de beurre non oxydée sont ajoutés au matériau comestible.

11. Un procédé selon l'une des Revendications 1-10, caractérisé en ce que la matière grasse de beurre oxydée est mélangée à de l'eau et à une matière grasse non oxydée, de façon telle qu'une émulsion stable soit obtenue.

12. Un procédé selon la Revendication 11, caractérisé en ce que la matière grasse de beurre oxydée, l'eau et la matière grasse de beurre non oxydée sont mélangées dans des proportions telles que le produit obtenu contient 10-95% (en masse) d'eau et 5-90% (en masse) de matière grasse et que la teneur totale en eau et en matière grasse est d'au moins 70% (en masse).

13. Un procédé selon l'une des Revendications 1-12, caractérisé en ce que la matière grasse de beurre oxydée a un indice de peroxyde d'au moins 1,5.

14. Un produit alimentaire aromatisé obtenu à partir d'un procédé selon l'une des Revendications 1-13.

15. Un produit alimentaire aromatisé selon la Revendication 14, caractérisé en ce que le produit alimentaire comprend au moins 0,05 ppm de n-pentanal, au moins 0,005 ppm de 2-trans-nonenal, et au moins 0,01 ppm de n-heptanal.

16. Un produit alimentaire aromatisé selon la Revendication 14 ou 15, caractérisé en ce que le produit alimentaire comprend moins de 40% en masse de matière grasse de beurre.

17. Un produit alimentaire aromatisé selon l'une des Revendications 14-16, caractérisé en ce que le produit n'a pas été stocké pendant plus de 10 jours, de façon plus préférentielle pendant plus de 5 jours.